# EUROPEAN PATENT SPECIFICATION

(11) **EP 0 331 490 B1**
(45) Date of publication and mention of the grant of the patent: **10.11.1993**
(21) Application number: 89302083.4
(22) Date of filing: 02.03.1989
(51) Int. Cl.: F16D 7/02, F16C 11/12

(54) **Shaft-locking device**
Wellenblockiereinrichtung
Dispositif de blocage d'axe

(30) Priority: 04.03.1988 JP 28201/88 U; 04.03.1988 JP 28202/88 U; 21.12.1988 JP 165569/88 U
(43) Date of publication of application: 06.09.1989
(73) Proprietor: NHK SPRING COMPANY LIMITED, Yokohama-shi Kanagawa-ken (JP)
(72) Inventor: Kitamura, Yoshiharu Komagane Kojo, Komagane-shi Nagano-ken (JP)
(74) Representative: Senior, Alan Murray

(56) References cited:
- FR-A- 1 067 245
- GB-A- 2 062 779
- US-A- 2 566 539
- US-A- 3 450 365

## Description

This invention relates to a rotation device to permit and lock rotation of a first part relative to a second part. The device of the invention is referred to herein as a shaft locking device. The device can be used for adjustment of the angle of incline of various kinds of devices such as a word processor or personal computer display, the headrest of a seat, or a reclining seat, or for various kinds of lids such as for prevention of falling of a toilet lid.

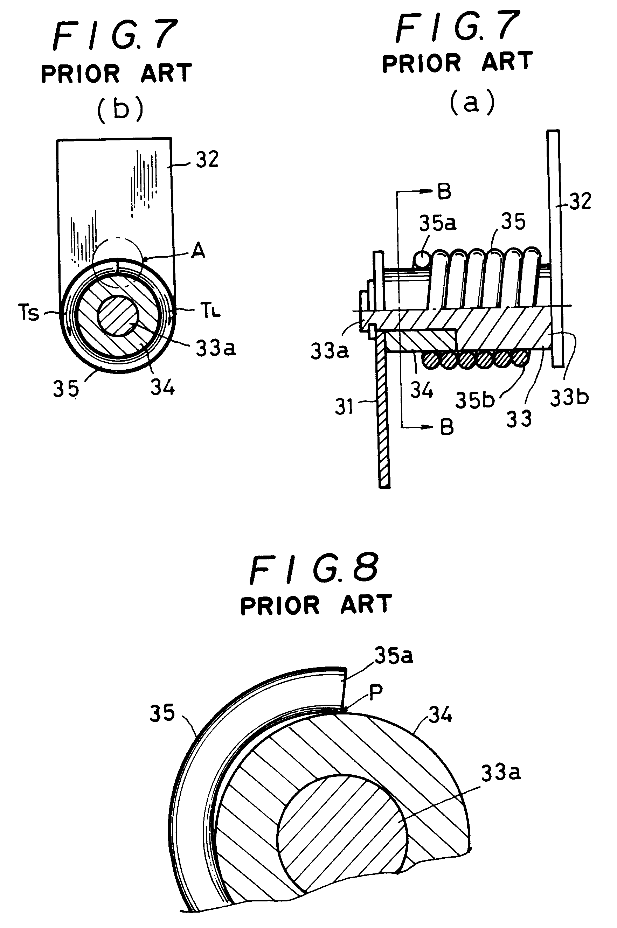

The shaft-locking device is used for stepless adjustment of the angles of incline of various kinds of devices described above. Fig. 7 shows a conventional shaft-locking device. The shaft-locking device is provided with a movable bracket 31 secured to a device requiring control of the angle of incline (not shown), a fixed bracket 32 secured to a supporting member (not shown) such as a base stand which supports the device directly or indirectly, a fixed shaft 33 integrally secured to the fixed bracket 32, and a movable shaft 34 which rotates with the movable bracket 31. The fixed shaft 33 has a portion of small diameter 33a which is rotatably inserted into the movable shaft 34. The outer diameter of the large diameter portion 33b of the fixed shaft 33 is the same as the outer diameter of the movable shaft 34. A coil spring 35 is wound around the fixed shaft 33 and the movable shaft 34. The spring 35 is wound so as to be somewhat smaller than the outer diameters of 33 and 34 when in a free state and in close contact with their outer surfaces. In this case, both ends 35a and 35b of the spring 35 are free, the ends 35a and 35b being positioned at the movable shaft side 34 and the fixed shaft side 33 respectively. In a shaft-locking device having such construction, the movable shaft 34 is locked by friction with the spring 35 to hold the device at a fixed angle. Adjustment of the angle is performed by causing the spring 35 and the movable shaft 34 to slip by applying external force greater than the frictional force, thereby rotating the movable shaft 34. Since rotation in the direction TL of the movable shaft 34 (rotation in the winding direction of the spring 35) decreases the diameter of the coil of the spring 35, the frictional force increases providing a locking torque. While rotation in the direction Ts (rotation in the unwinding direction of the spring 35) enlarges the diameter of the spring 35, thereby decreasing the frictional force and providing slip torque. Since the locking torque is large compared with the slip torque, the device remains at a fixed angle.

In the conventional shaft-locking device, although it is possible to prevent rotation in the winding direction, rotation in the opposite direction (the winding direction) causes the spring 35 to expand and the frictional force to decrease, lessening the locking force. Accordingly, in order to prevent rotation in both the winding and the opposite direction another shaft-locking device with an opposite winding direction is necessay. This necessitates a complicated construction.

Further, in the conventional shaft-locking device, the winding of the spring 35 around a rotating movable shaft 34 is not always uniform. This is because the spring 35 has a fixed winding pitch. This tendency is most noticable at an end portion 35a of the movable shaft side 34 in the spring 35. The end portion 35a of the spring 35, as shown in Fig. 8, contacts the periphery surface of the movable shaft 34 at point P, but the surface of the side of the spring 35 does not contact the movable shaft 34 because of this contact. With such an arrangement of the spring, the locking torque of the spring 35 cannot be maintained constant, thereby causing unstable locking.

GB-2,062,779 discloses a spring clutch drive mechanism employing a spring to bind about one of two gears according to the direction of rotation of a central shaft.

US-3,450,365 discloses a torque limiting device employing two springs wound about the coaxial shafts.

It is an aim of this invention to provide a shaft-locking device with which is possible to prevent rotation in both directions securely with a single device.

It is another aim of this invention to provide a shaft-locking device with which is possible to obtain the locking torque of the spring in safety.

According to the present invention, there is provided a rotation device to permit, and lock rotation of a first part relative to a second part, said device comprising:
a first shaft connected to the first part and having a spring engaging portion
second shafts both connected to the second part such that they cannot rotate relative to one another and being located either side of said portion of said first shaft
a coil spring wound closely around said second shafts and around said portion, so as to restrain relative rotation therebetween.

Also according to the present invention there is provided a rotation device to permit, and lock, rotation of a first part relative to a second part, said device comprising:
a first shaft to be connected to said first part,
at least one second shaft to be connected to said second part,
a coil spring closely wound around said first shaft and said at least one second shaft so as to restrain relative movement therebetween, and wherein
at least one end portion of said coil spring is separated from the outer surface of an appropriate one of said first and second shafts whereby the remainder of said coil spring may more uniformly grip the outer surface of said shaft.

A preferred exemplary embodiment of the present invention will be described hereinafter with reference to the accompanying drawings in which:
Fig. 1 is a first example of the shaft-locking device according to this invention which is capable of preventing rotation of the movable shaft in either direction. In Fig. 1, (a) is a partially sectional view, and (b) is a left side view of (a).
Fig. 2 is a second example of the shaft-locking device according to this invention. In Fig. 2, (a) is partially sectional view, and (b) is a left side view of (a).
Fig. 3 is a third example of the shaft locking device according to this invention which is capable of obtaining always a constant locking torque. In Fig. 3, (a) is a partially cross-sectional vertical view, and (b) is a transverse cross-section taken along the line C-C of (a).
Fig. 4 is a partially cross-sectional vertical view of the second example of the shaft-locking device according to this invention.
Fig. 5 is a third example of the shaft-locking device according to this invention. In Fig. 5, (a) is a transverse cross-section thereof and (b) is a vertical cross-section thereof.
Fig. 6 is a vertical cross-sectional of a fourth example of the shaft-locking device according to this invention.
Fig. 7 is a conventional shaft-locking device. In Fig. 7, (a) is a partially cross-sectional vertical view, and (b) is a cross section along the line B-B of (a).
Fig. 8 is a enlarged cross-sectional shown by an arrow A.

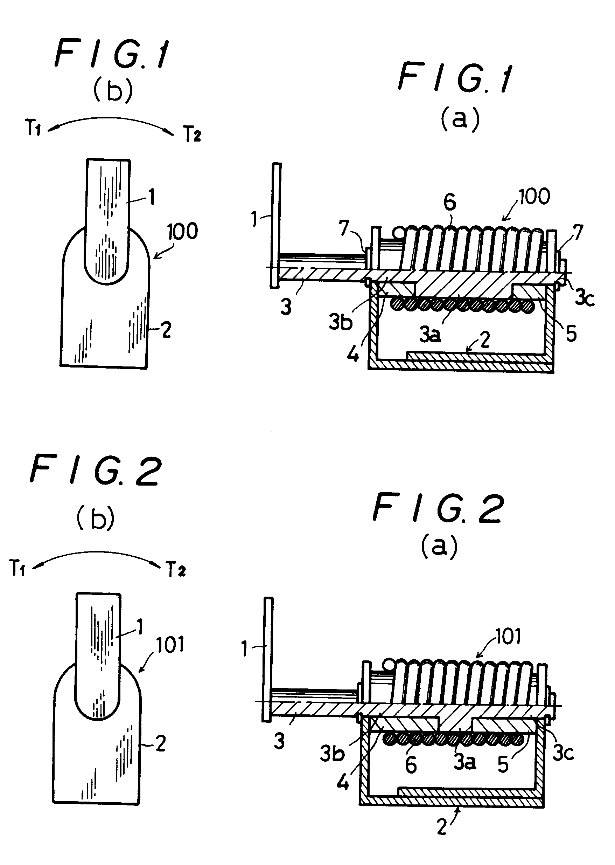

Referring to the embodiments of the invention shown in Fig. 1 to Fig. 6, in which like numerals denote like parts.

Fig. 1 and Fig. 2 illustrate the shaft-locking devices 100 and 101 respectively which allow locking of the rotation of the movable shaft in both directions.

The shaft-locking device 100 is provided with a movable bracket 1 secured to a device (not shown) directly or indirectly which requires adjustment of its angle of incline, a fixed bracket 2 secured to a base stand which supports said device or a supporting member (not shown) of a table directly or indirectly, a movable shaft 3 fixed to said movable bracket 1, fixed shafts 4, 5 integrally fixed to said fixed bracket 2 and a coil spring 6 wrapped around the movable shaft 3 and fixed shafts 4, 5. The movable shaft 3 has a long shaft body, the central portion 3a of which has a large diameter while both end portions 3b, 3c have small diameters. The spring 6 is wrapped around the movable shaft 3 and contacts the central portion 3a. The fixed bracket 2 is "U-shaped" and is formed from two "L"-shaped members, said fixed shafts 4, 5 being secured to opening end portions of the "L" shaped member. The small diameter portions 3b, 3c of the movable shaft 3 are inserted into the fixed shafts 4, 5 respectively so as to rotatably support the moveable shaft. The outer diameter of the fixed shafts 4, 5 is the same as the large diameter of the central portion 3a of the movable shaft 3. In this case, the large diameter portion 3a of the movable shaft 3 is longer in the shaft direction then both fixed shafts 4, 5 so that there are more turns of the spring around the central portion 3a of the movable shaft 3 than around each fixed shaft 4, 5. Both ends of the coil spring 6 are free. The coil spring is wrapped around the large diameter portion 3a of the movable shaft 3 and the fixed shafts 4, 5 when it is in an enlarged diameter state. Once assembled, the coil spring 6 closely contacts the movable shaft 3 and the fixed shafts 4, 5, providing a restraining torque between these shafts when the movable shaft 3 is rotated. Further, E rings 7 are attached to movable shaft 3 at both sides of the fixed bracket 2 to prevent the fixed bracket 2 sliding off.

In a device having such a construction, since there are more turns of the coil spring in contact with the movable shaft 3 than the fixed shafts 4, 5, the frictional force between the coil spring 6 and the movable shaft 3 is larger than the frictional force between the coil spring 6 and the fixed shafts 4, 5, whereby the coil spring 6 rotates with the rotation of the movable shaft 3 when the movable bracket 1 rotates. Since a fixed shaft is provided at each end of the movable shaft 3, the coil spring 6 tightens around one of the fixed shafts 4, 5 causing a locking torque while it loosens around the other causing a slip torque which ever direction the movable shaft rotates.

In the illustration, the force requires to rotate the movable bracket 1 in the T1 direction equals the sum of the locking torque between the fixed shaft 4 and the coil spring 6 and the slip torque between the fixed shaft 5 and the coil spring 6, hence if the force applied is less than this sum, rotation in the T1 direction is prevented. On the other hand, the force required to rotate the movable bracket 1 in the T2 direction equals the sum of the locking torque between the fixed shaft 5 and the coil spring 6, and the slip torque between the fixed shaft 4 and the coil spring 6, here the force applied is less than this sum, rotation in the T2 direction is prevented. Accordingly, since prevention of rotation in both the positive and negative directions of the movable shaft 3 is possible using a single shaft-locking device, the construction of a device is signified.

Therefore, stepless adjustment of the angle of incline may be performed by causing slip between the fixed shafts 4, 5 and the coil spring 6 by applying an external force to the movable shaft 3 greater than the forces described above.

Further, a modification of the shaft-locking device 100 will be described as follows.

A first modification thereof has a construction wherein either on both end portions of the coil spring 6 are separated from outer circumferences of the fixed shafts 4 and 5. Therefore the inside of the coil spring 6 near the end contacts the fixed shaft 4 (5) alleviating the problem shown in Figure 8 and providing a stable locking torque.

Alternative constructions of this modification include: A construction wherein either or both end portions of the coil spring 6 are separated from the outer circumference of the fixed shaft 4 (5) by extending them in a tangent to the outer circumference of the fixed shaft 4 (5) in a similar manner to that of the shaft-locking device 102 described hereafter; a construction wherein either or both end portions of the coil spring 6 are separated from the outer circumference of the fixed shaft 4 (5) by winding them in a larger diameter than the other portions in a similar manner by that of the shaft-locking device 104 described hereafter; a construction wherein the fixed shafts 4, 5 are stepped shafts having a small and a large diameter, both end portions of said coil spring 6 being positioned at the small diameter portions of the fixed shaft 4 (5) to separate from the outer circumferences of the fixed shafts 4 (5) in a manner similar to that of the shaft-locking device 103 described hereafter.

Further, a second modification thereof has a construction wherein a grease exists between both end portions of the coil spring 6 and the outer circumference of the fixed shaft 4, 5 in the first modification. With such a construction, rusting at the separated portion of the coil spring 6 is prevented, thereby enabling maintenance of a stable locking torque for a long-period of time.

The embodiment construction thereof is one wherein a grease is allowed to intervene in the clearance between the separated end portion of the coil spring 6 and the outer circumference of the fixed shafts 4, 5 in each construction shown in the first modification.

Fig. 2 shows another shaft-locking device 101. As shown in Fig. 2, the length of the large diameter portion 3a in the movable shaft 3 is short, while the length of the fixed shaft 4, 5 provided at the both sides thereof is long. Accordingly, the number of turns of the coil spring 6 around the fixed shafts 4, 5 is larger than the member around the movable shaft 3, whereby the friction force between coils spring 6 and the fixed shafts 4 and 5 becomes large and the coil spring 6 remains stationary with shafts 4 and 5. In this construction, the coil spring locks around the movable shaft 3 if the movable shaft 3 rotates in either the T1 or the T2 direction. In other words, if the movable bracket 1 rotates in either the T1 or the T2 direction, the coil spring 6 locks around the movable shaft 3, thereby locking the movable bracket 1 against movement in either direction.

By this stepless adjustment of the angle of the member connected to the movable bracket 1 can be performed by causing the movable shaft 3 and the coil spring 6 to slip by applying an external force to the member greater than the locking force described above.

The shaft-locking devices 100 and 101 described above, are capable of preventing rotation in the positive and negative directions of the movable shaft 3, because fixed shafts 4 and 5 are provided at both ends of the movable shaft 3 and the coil spring 6 is closely wrapped around the movable shaft 3 and both fixed shafts 4, 5.

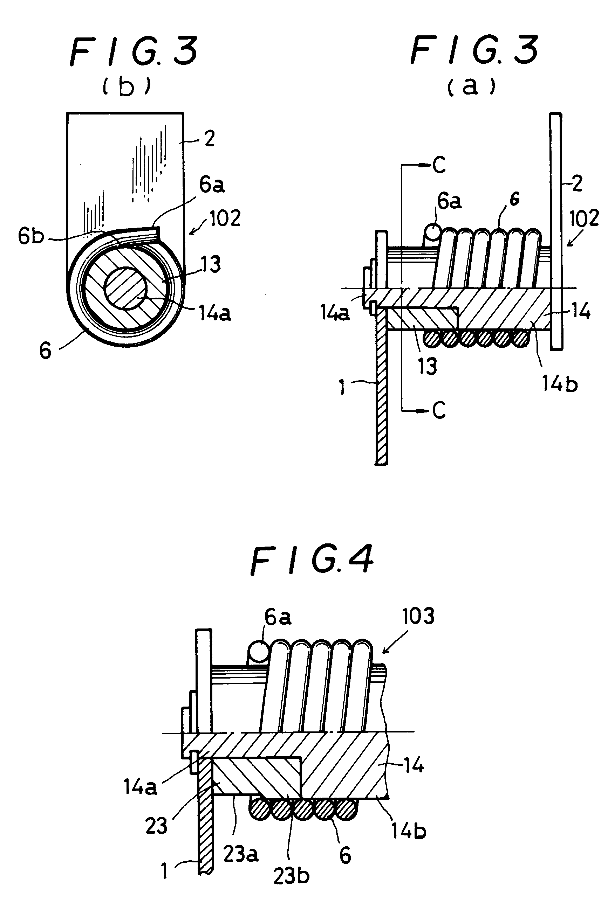

Fig. 3 to Fig. 6 represent shaft-locking devices, 102 and 103 as examples of this invention which are capable of obtaining a constant locking torque.

In the shaft-locking device 102 shown in Fig. 3 a small diameter portion 14a of a fixed shaft is rotatably inserted into a movable shaft 13, and a coil spring 6 is wrapped closely arond the fixed shaft 14 and movable shaft 13. The fixed bracket 2 is secured to the end portion of the fixed shaft 14 as shown in Fig. 3 (a), and the movable bracket 1 is secured to the end portion of the movable shaft 13. The fixed shaft 14 has a stepped shaft body consisting of a small diameter portion 14a on the left side and a large diameter portion 14b on the right side, the small diameter portion 14a of the fixed shaft 14 being rotatably inserted into the movable shaft 13. The movable shaft 13 and the large diameter portion 14b of the fixed shaft 14 are formed to have the same outer diameter, and the coil spring 6 is wrapped around the movable shaft 13 and the large diameter portion 14b of the fixed shaft 14. The coil spring 6 is wound so that its diameter, when free, is somewhat smaller than the outer diameter of the movable shaft 13 and of the larger diameter portion 14b of the fixed shaft 14. When assembled, this closely contacts the movable shaft 13 and the fixed shaft 14. By this, rotation of the movable shaft 13 is locked, whereby the device to which the movable bracket 1 is secured (not shown) is locked at a given inclined angle.

In such a shaft-locking device 102, the end portion 6a on the movable shaft 13 side of the coil spring 6 is extended in a tangent to the outer circumference of the movable shaft 13 as shown in Fig. 3(b). In other words, an area 6b on the coil, away from the end area 6a of the coil spring 3 contacts the outer periphery of the movable shaft 13, said end area 6a being extended in a tangent away from this contact point 6b. By this, the end area 6a on the movable shaft 13 side of the coil spring 6 is separated from the outer periphery of the movable shaft 13, whereby the end area 6a does not contact with the outer periphery of the movable shaft 13. Accordingly, portions of the coil spring 6 other than the end area 6a contact closely and uniformly with outer periphery of the movable shaft 13, thereby obtaining a stable locking torque.

Fig. 4 shows a shaft-locking device 103. Although the shaft-locking device 103 has the same fundamental construction as the shaft-locking device 102 as shown in Fig. 4, a stepped movable shaft 23 consisting of a small diameter portion 23a and a large diameter portion 23b is used. The large diameter portion 23b of the movable shaft 23 is formed to have the same outer diameter as the large diameter portion 14b. The coil spring 6 closely contacts the large diameter portions 23b and 14b and is wrapped around the small diameter portion 23a so that the end area 6a of the coil spring 6 is positioned such that it does not contact the outer periphery of the small diameter portion 23a.

Accordingly, the end area 6a of the movable shaft 23 are separated in a similar manner to the shaft-locking device 102, the remainder of the coil spring 6 contacts closely and uniformly with the large diameter portion 23b of the movable shaft 23, thereby obtaining a stable locking torque due to the coil spring.

Since the shaft-locking device 102, 103 are, a described above, adapted to separate the end area 6a of the coil spring and the movable shaft sides 13(23), the remainder of the coil spring 6 and the movable shaft 13(23) are in close and uniform contact, thereby obtaining a stable locking torque of the coil spring.

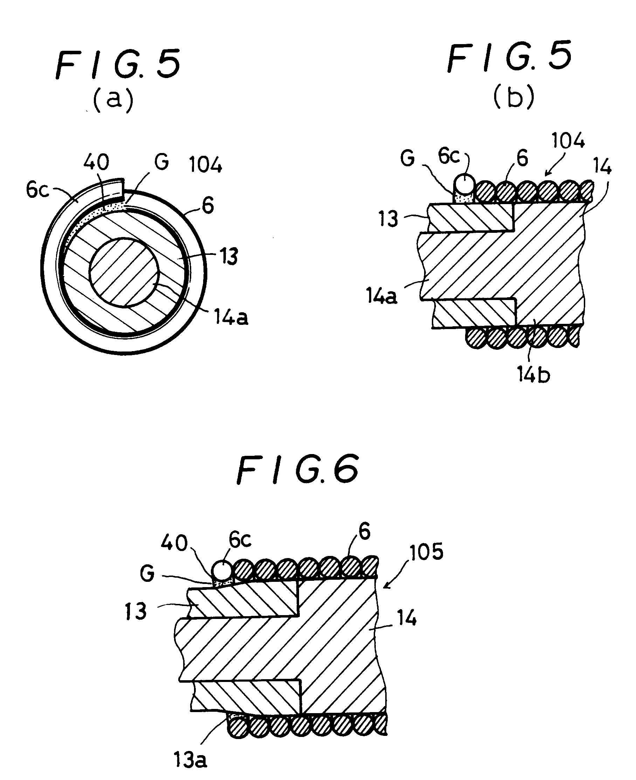

Fig. 5 and Fig. 6 present further embodiments of said shaft-locking devices 102 and 103.

In the shaft-locking devices, 102 (and 103) areas where the movable shaft 13 (and 23) contact the coil spring 6, are slow to rust, while at the end area 6a of the coil spring 6 where the movable shaft 13, (23) and the coil spring 6 do not contact, rusting occurs easily. When rust occurs after a long period of use or use in an environment having a high temperature and high humidity, the locking torque increases extremely by this rust which prevents adjustment of the inclination by a fixed force. In the shaft locking devices 104 and 105, this problem of the shaft-locking devices 102 and 103 is alleviated.

The shaft-locking device 104 shown in Fig. 5, is provided with a fixed shaft which consists of a small diameter portion 14a and a large diameter portion 14b, a movable shaft 13 in to which is rotatably inserted the small diameter portion 14a of the fixed shaft 14 and a coil spring 6 is wrapped around these shafts 13, 14. The outer circumference of the large diameter portion 14b of the fixed shaft 14 and the outer circumference of the movable shaft 3 are formed to be the same surface, the coil spring 13 being wound so as to have a somewhat smaller diameter than these diameters when free. Accordingly, when the coil spring 6 is wrapped around the fixed shaft 14 and the movable shaft 13, locking of the rotation of the movable shaft 13 is performed by the close contact of the coil spring 6 to the shafts 13 and 14. In the device 104, the end area 6c on the movable shaft 1 side of the coil spring 6 is wound with a larger diameter than the rest of the coil. In the illustration, this end area 6c is wound so that the coil diameter gradually increases in the free end direction. A clearance G is formed between the coil end portion 6c of the large diameter and the movable shaft 13, said clearance being filled with grease 40 for lubrication.

In the shaft-locking device 104 having such construction, since the end area 6c of the coil spring 6 does not contact with the movable shaft 13 as well as the shaft, not only can a stable locking torque be obtained, but also the locking torque does not change even in a long period of use and a high humidity environment because the grease 40 in the clearance between the spring end portion 6c and the movable shaft 13 prevents the occurrence of the rust.

Fig. 6 shows a shaft-locking device 105 which is another example of a shaft-locking device which prevents the occurrence of rust. In this shaft-locking device 105, a taper surface 13a is formed on the movable shaft 13. The taper surface is formed so that it becomes gradually smaller in diameter toward the end portion 6c of the coil spring 6. Because of this taper surface 13, the clearance G is formed between the spiral end portion 6c and the movable shaft even if the coil spring 6 is wound with the same diameter. Grease 40 is provided for lubrication in the clearance G between the spring end portion 6c and the movable shaft 13 so that it may prevent the occurrence of rust.

As described above, in the shaft-locking devices 104, 105, the clearance G is formed between the end portion 6c of the coil spring 6 and the movable shaft 13 to prevent these contacting. Further, since the grease 40 is provided in the clerance G, not only can a stable locking torque be obtained, but also there is no occurrence of rust. Accordingly, a stable locking torque is maintained for a long period.

## Claims

1. A rotation device to permit, and lock rotation of a first part (1) relative to a second part (2), said device comprising:
a first shaft (3) connected to the first part (1) and having spring engaging portion (3a)
second shafts (4, 5), both connected to the second part (2) such that they cannot rotate relative to one another and being located either side of said portion (3a) of said first shaft (3)
a coil spring (6) wound closely around said second shafts (4, 5) and around said portion (3a), so as to restrain relative rotation therebetween.

2. A rotation device according to claim 1 wherein:
said second shafts (4, 5) are hollow,
said first shaft has side portions (3b, 3c) either side of said portion (3a), said side portions (3b, 3c) having smaller diameters than said portion (3a) and being inserted into said second shafts so as to rotatably support said first shaft, and
said second shafts (4, 5) and said portion (3a) of said first shaft (3) have the same external diameter.

3. A rotation device according to claim 1 or 2 wherein there are more turns of said coil spring (6) wound around said portion (3a) of said first shaft than around said second shafts (4, 5).

4. A rotation device according to claim 1 or 2 wherein there are more turns of said coil spring (6) wound around said second shafts (4, 5) than around said portion (3a) of said first shaft (3).

5. A rotation device according to any preceding claim wherein at least one end portion (6a) of said coil spring (b) is separated from the outer surface of respective second shafts (4, 5).

6. A rotation device to permit, and lock, rotation of a first part relative to a second part, said device comprising:
a first shaft (13) to be connected to said first part,
one second shaft (14) fast connected to said second part,
a coil spring (6) closely wound around said first shaft (13) and said at least one second shaft (14) so as to restrain relative movement therebetween, and wherein
at least one end portion (6a) of said coil spring (6) is separated from the outer surface of an appropriate one of said first and second shafts (13, 14) whereby the remainder of said coil spring (6) may more uniformly grip the outer surface of said shaft.

7. A rotation device according to claim 5 or 6 wherein said at least one end portion (6a) of said spring 6) extends at a tangent to the outer surface of said one of said shafts.

8. A rotation device according to claim 5 or 6 wherein said at least one end portion (6a) of said spring (6) is wound with a larger diameter than the remainder of said spring.

9. A rotation device according to claim 5 or 6 wherein at least one of said second shafts (4, 5) is stepped, having portions of small and large diameter, said portions of small diameter being remote from said first shaft (3) and the end portions (6a) of said coil spring being positioned around said portions of small diameter.

10. A device according to any of claims 5 to 9 wherein grease is provided between said end portions (6a) of said coil spring (6) and said fixed shafts (4, 5).

## Patentansprüche

1. Rotationseinrichtung, die eine Rotation eines ersten Teils (1) gegenüber einem zweiten Teil (2) zuläßt und sperrt, wobei die Einrichtung folgendes umfaßt:
eine erste Welle (3), die mit dem ersten Teil (1) verbunden ist und einen Federeingriffsabschnitt (3a) aufweist,
zweite Wellen (4, 5), die beide so mit dem zweiten Teil (2) verbunden sind, daß sie sich relativ zueinander nicht drehen können und sich auf jeder Seite des Abschnitts (3a) der ersten Welle (3) befinden,
eine Schraubenfeder (6), die eng um die zweiten Wellen (4, 5) und um den Abschnitt (3a) gewickelt ist, um eine Relativrotation zwischen ihnen zu unterdrücken.

2. Rotationseinrichtung nach Anspruch 1, bei der
die zweiten Wellen (4, 5) hohl sind,
die erste Welle Seitenabschnitte (3b, 3c) auf jeder Seite des Abschnitts (3a) aufweist, wobei die Seitenabschnitte (3b, 3c) kleinere Durchmesser aufweisen als der Abschnitt (3a) und in die zweiten Wellen so eingeführt werden, daß sie die erste Welle drehbar halten, und
die zweiten Wellen (4, 5) und der Abschnitt (3a) der ersten Welle (3) den gleichen Außendurchmesser aufweisen.

3. Rotationseinrichtung nach Anspruch 1 oder 2, bei der mehr Windungen der Schraubenfeder (6) um den Abschnitt (3a) der ersten Welle gewickelt sind als um die zweiten Wellen (4, 5).

4. Rotationseinrichtung nach Anspruch 1 oder 2, bei der mehr Windungen der Schraubenfeder (6) um die zweiten Wellen (4, 5) gewickelt sind als um den Abschnitt (3a) der ersten Welle (3).

5. Rotationseinrichtung nach einem der vorhergehenden Ansprüche, bei der zumindest ein Endabschnitt (6a) der Schraubenfeder (6) von der Außenfläche der jeweiligen zweiten Wellen (4, 5) getrennt ist.

6. Rotationseinrichtung, die eine Rotation eines ersten Teils gegenüber einem zweiten Teil zuläßt und sperrt, wobei die Einrichtung folgendes umfaßt:
eine ersten Welle (13), die an dem ersten Teil angebracht werden soll,
eine zweite Welle (14), die fest mit dem zweiten Teil verbunden wird,
eine Schraubenfeder (6), die eng um die erste Welle (13) und die zumindest eine zweite Welle (14) gewickelt ist, um eine Relativbewegung zwischen ihnen zu unterdrücken, und wobei
zumindest ein Endabschnitt (6a) der Schraubenfeder (6) von der Außenfläche einer entsprechenden der ersten und zweiten Wellen (13, 14) getrennt ist, wodurch der Rest der Schraubenfeder (6) die Außenfläche der Welle gleichmäßiger fassen kann.

7. Rotationseinrichtung nach Anspruch 5 oder 6, bei der sich der zumindest eine Endabschnitt (6a) der Feder (6) in einer Tangente zu der Außenfläche der einen der Wellen erstreckt.

8. Rotationseinrichtung nach Anspruch 5 oder 6, bei der der zumindest eine Endabschnitt (6a) der Feder (6) mit einem größeren Durchmesser als der Rest der Feder gewickelt ist.

9. Rotationseinrichtung nach Anspruch 5 oder 6, bei der zumindest eine der zweiten Wellen (4, 5) abgestuft ist und Abschnitte mit kleinem und mit großem Durchmesser aufweist, wobei die Abschnitte mit kleinem Durchmesser entfernt von der ersten Welle (3) und den Endabschnitten (6a) der Schraubenfeder liegen, die um die Abschnitte mit kleinerem Durchmesser herum positioniert sind.

10. Einrichtung nach einem der Ansprüche 5 bis 9, bei der ein Schmiermittel zwischen den Endabschnitten (6a) der Schraubenfeder (6) und den feststehenden Wellen (4, 5) vorgesehen ist.

## Revendications

1. Dispositif de rotation pour permettre et bloquer la rotation d'un premier élément (1) par rapport à un second élément (2), ledit dispositif comprenant:
un premier axe (3) relié au premier élément (1) et comprenant une portion d'engagement de ressort (3a),
des seconds axes (4, 5), tous les deux reliés au second élément (2) de manière qu'ils ne puissent pas tourner l'un par rapport à l'autre et situés de chaque côté de ladite portion (3a) dudit premier axe (3),
un ressort hélicoïdal (6) enroulé étroitement autour desdits seconds axes (4, 5) et autour de ladite portion (3a) de manière à empêcher une rotation relative entre eux.

2. Dispositif de rotation selon la revendication 1, dans lequel:
lesdits seconds axes (4, 5) sont creux,
ledit premier axe comprend des portions latérales (3b, 3c) de chaque côté de ladite portion (3a), lesdites portions latérales (3b, 3c) étant de plus petit diamètre que ladite portion (3a) et étant insérées dans lesdits seconds axes de manière à supporter de façon rotative ledit premier axe, et
lesdits seconds axes (4, 5) et ladite portion (3a) dudit premier axe (3) ont le même diamètre externe.

3. Dispositif de rotation selon la revendication 1 ou 2, dans lequel il y a plus de spires du ressort hélicoïdal (6) enroulées autour de ladite portion (3a) dudit premier axe qu'autour desdits seconds axes (4, 5).

4. Dispositif de rotation selon la revendication 1 ou 2, dans lequel il y a plus de spires dudit ressort hélicoïdal (6) enroulées autour desdits seconds axes (4, 5) qu'autour de ladite portion (3a) dudit premier axe (3).

5. Dispositif de rotation selon l'une quelconque des revendications précédentes, dans lequel une portion d'extrémité (6a) au moins dudit ressort hélicoïdal (6) est séparée de la surface externe des seconds axes respectifs (4, 5).

6. Dispositif de rotation pour permettre et bloquer la rotation d'un premier élément par rapport à un second élément, ledit dispositif comprenant:
un premier axe (13) destiné à être relié audit premier élément,
un second axe (14) relié fermement audit second élément,
un ressort hélicoïdal (6) enroulé étroitement autour dudit premier axe (13) et dudit au moins un second axe (14) de manière à empêcher un mouvement relatif entre eux, et dans lequel
au moins une portion d'extrémité (6a) dudit ressort hélicoïdal (6) est séparée de la surface externe de l'un desdits premier et second axes (13, 14) qui convient, le reste dudit ressort hélicoïdal (6) pouvant s'appliquer de façon plus uniforme sur la surface externe dudit axe.

7. Dispositif de rotation selon la revendication 5 ou 6, dans lequel ladite au moins une portion d'extrémité (6a) dudit ressort (6) s'étend tangentiellement à la surface externe de l'un desdits axes.

8. Dispositif de rotation selon la revendication 5 ou 6, dans lequel ladite au moins une portion d'extrémité (6a) dudit ressort (6) est enroulée sur un plus grand diamètre que le reste dudit ressort.

9. Dispositif de rotation selon la revendication 5 ou 6, dans lequel l'un au moins desdits seconds axes (4, 5) est en gradins, comprenant des portions de petit et grand diamètres, lesdites portions de petit diamètre étant éloignées dudit premier axe (3) et les portions d'extrémité (6a) dudit ressort hélicoïdal étant positionnées autour desdites portions de petit diamètre.

10. Dispositif selon l'une quelconque des revendications 5 à 9, dans lequel de la graisse est prévue entre lesdites portions d'extrémité (6a) dudit ressort hélicoïdal (6) et lesdits axes fixes (4, 5).
